# EUROPEAN PATENT SPECIFICATION

(11) **EP 3 472 930 B1**
(45) Date of publication and mention of the grant of the patent: **16.03.2022**
(21) Application number: 16732262.7
(22) Date of filing: 20.06.2016
(51) Int. Cl.: H02P 6/10, H02P 21/05

(54) **SYSTEMS AND METHODS FOR REDUCTION OF OSCILLATIONS IN TURBOMACHINERY SYSTEMS**
SYSTEME UND VERFAHREN ZUR REDUZIERUNG VON SCHWINGUNGEN IN TURBOMASCHINENSYSTEMEN
SYSTÈMES ET PROCÉDÉS DE RÉDUCTION DES OSCILLATIONS DANS DES SYSTÈMES DE TURBOMACHINE

(43) Date of publication of application: 24.04.2019
(73) Proprietor: Nuovo Pignone Tecnologie SrL, 50127 Florence (IT)
(72) Inventor: TENCA, Pierluigi, 85748 München (DE); ROTONDO, Paola, 50127 Florence (IT); SGRO', Daniele, 50127 Florence (IT); MEUCCI, Francesco, 50127 Florence (IT)
(74) Representative: Novagraaf Group
(86) International application number: PCT/EP2016/064198
(87) International publication number: WO 2017/220117

(56) References cited:
- EP-A2- 2 704 306
- WO-A1-2011/121041
- JP-A- 2008 109 823
- US-A- 4 994 684
- US-A1- 2011 267 012

## Description

### BACKGROUND

The field of the disclosure relates generally to turbomachinery systems, and, more specifically, to electrical machine rotor windings and systems and methods for reduction of torsional oscillations in turbomachinery systems.

US 2011/267012 A1 discloses calculating a total magnetic flux density in an airgap of a double fed induction machine and determining a new rotor current.

In known turbomachinery systems employing electrical machines which either drive turbomachines, e.g., electrical motors in pumping operations and compression plants, or are driven by turbomachines, e.g., electrical power generators, complex interactions of electrical machine harmonic oscillations and torsional dynamics of shafts in rotating equipment trains cause sub-synchronous torsional interactions (SSTIs). In such known turbomachinery systems, e.g., liquefied natural gas compression plants, SSTIs and resulting oscillations cause increased maintenance costs, reduced operational efficiency, and equipment service life reduction.

In at least some known turbomachinery systems employing electrical machines, SSTIs experienced by shafts and rotating machinery coupled thereto are caused by torque imbalances arising in electrical machines including motors and generators. Such electrical machines, shafts, and associated rotating machinery often form long trains of equipment in which SSTIs arising in one portion of the train generate undesirable effects not only at that location, but at various other locations distant from the initial point of origin. Also, in such known turbomachinery systems, mitigation of SSTIs and resulting aberrant torque is expensive, requires substantial modification of existing systems and plant equipment, and is subject to design constraints from existing electrical and mechanical loads. Further, in such known turbomachinery systems, known SSTI and torque mitigation devices and systems are complex, require elaborate control systems, are cumbersome to integrate into existing plant operations, and require complete plant shutdown for their installation and maintenance.

### BRIEF DESCRIPTION

In one aspect, an electrical machine is provided. The electrical machine includes a stator defining a cavity therein, a shaft, and a rotor coupled to the shaft, where the rotor and the shaft are configured to be positioned at least partially in the cavity. The rotor includes at least one rotor winding coupled to the rotor power converter. The at least one rotor winding is configured to alternately energize and de-energize to alternately apply and remove, respectively, a corrective torque to the electrical machine to dampen harmonic oscillations.

In another aspect, a method of damping oscillations of a turbomachinery system is provided. The turbomachine system includes an electrical machine coupled to a turbomachine by a shaft extending therebetween. The electrical machine includes a stator defining a cavity therein and a rotor coupled to the shaft and configured to be positioned at least partially within the cavity. The rotor includes at least one rotor winding. The method includes detecting, through a sensor coupled to the turbomachinery system, a physical characteristic of the turbomachinery system representative of oscillations. The method also includes determining, through data transmitted by the sensor, a presence of oscillations. The method further includes alternately energizing and de-energizing the at least one rotor winding to alternately apply and remove, respectively, a corrective torque to the electrical machine to dampen oscillations of the turbomachinery system.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an exemplary turbomachinery system;
FIG. 2 is a schematic diagram of an alternative turbomachinery system; and
FIG. 3 is a flowchart diagram of an exemplary method of damping oscillations of an electrical machine in a turbomachinery system that may be used with the turbomachinery systems shown in FIGs. 1 and 2.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, and such ranges are identified and include all the sub-ranges contained therein unless context or language indicates otherwise.

As used herein, the terms "processor" and "computer" and related terms, e.g., "processing device", "computing device", and "controller" are not limited to just those integrated circuits referred to in the art as a computer, but broadly refers to a microcontroller, a microcomputer, a programmable logic controller (PLC), an application specific integrated circuit (AISC), and other programmable circuits, and these terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

Furthermore, as used herein, the term "real-time" refers to at least one of the time of occurrence of the associated events, the time of measurement and collection of predetermined data, the time to process the data, and the time of a system response to the events and the environment. In the embodiments described herein, these activities and events occur substantially instantaneously.

The electrical machine rotor windings for reduction of oscillations in turbomachinery systems and associated systems and methods described herein reduce sub-synchronous torsional interactions (SSTIs) of shafts and rotating machinery including electrical machines in rotating equipment trains. The embodiments described herein also mitigate undesirable cffccts of SSTIs and aberrant torques arising therefrom in turbomachinery systems. The embodiments described herein further reduce torque imbalances in electrical machines employed in turbomachinery systems. The electrical machine rotor windings for reduction of oscillations in turbomachinery systems and associated systems and methods described herein also reduce operating and maintenance costs and increase operational efficiency of turbomachinery systems. The embodiments described herein further provide less complex and less expensive SSTI mitigation devices, systems, and methods that are easier to operate and integrate into existing plant designs. The embodiments described herein also enable installation and maintenance of SSTI mitigation devices and systems without shutting down turbomachinery system operations.

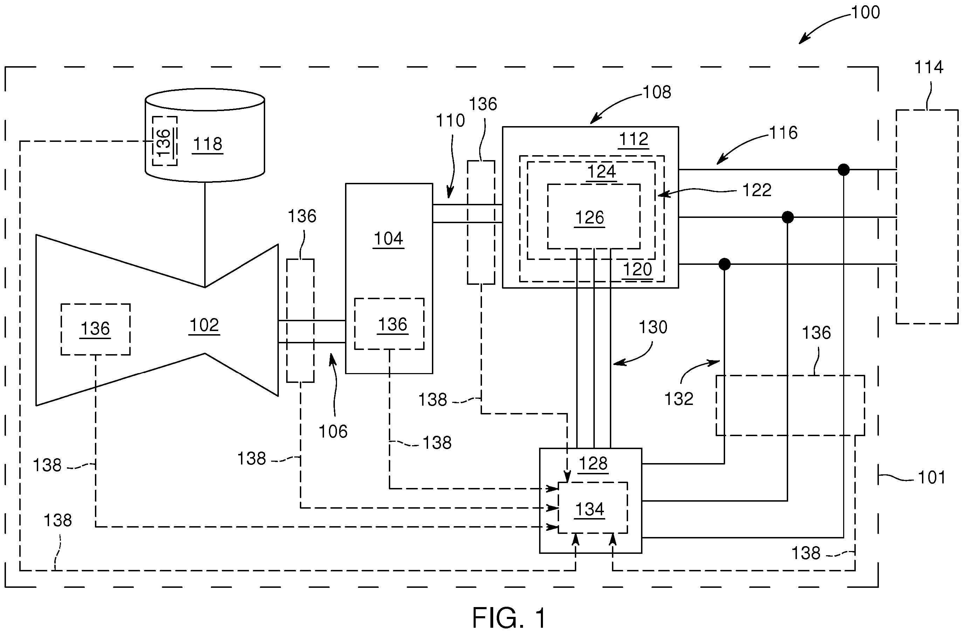

FIG. 1 is a schematic diagram of an exemplary turbomachinery system 100. In the exemplary embodiment, turbomachinery system 100 is situated in a turbomachinery facility 101 and includes a turbomachine 102 including, without limitation, a gas turbine engine including a compressor, a combustor, and a turbine. Turbomachinery system 100 also includes an auxiliary machine 104 including, without limitation, a gear box. Auxiliary machine 104 is rotatably coupled to turbomachine 102 through a first shaft 106. Turbomachinery system 100 further includes an electrical machine 108 rotatably coupled to auxiliary machine 104 through a second shaft 110. In the exemplary embodiment, electrical machine 108 is embodied in a generator 112 including, without limitation, a doubly-fed induction generator (DFIG). Turbomachine 102 functions as a prime mover for generator 112, and turbomachine facility 101 is embodied in an electrical power generation facility configured to supply electricity to a grid 114 through 3-phase power lines 116. Turbomachinery system 100 also includes a power source 118 coupled to turbomachine 102. Power source 118, in this exemplary embodiment, is embodied in a fuel supply including, without limitation, a natural gas supply, to drive a rotation of turbomachine 102. In other embodiments, not shown, turbomachinery system 100 does not include auxiliary machine 104 and second shaft 110, and turbomachine 102 is rotatably coupled to generator 112 through first shaft 106.

Generator 112 includes a stator 120 embodied in an annular stator 120 defining an annular cavity 122 therein. Generator 112 also includes a rotor 124 coupled to second shaft 110. Rotor 124, in the exemplary embodiment, is embodied in an annular rotor 124 and includes at least one rotor winding 126 extending around rotor 124.

Turbomachinery system 100, in the exemplary embodiment, includes a rotor power converter 128 coupled to rotor winding 126 through at least one rotor electrical line 130. Rotor winding 126 is embodied in a plurality of rotor windings 126 including a first phase rotor winding 126, a second phase rotor winding 126, and a third phase rotor winding 126. Each rotor winding 126 of the plurality of rotor windings 126 is coupled to a respective rotor electrical line 130 of a plurality of rotor electrical lines 130. In other embodiments, not shown, rotor winding 126 is embodied in at least one of a single phase rotor winding 126, two rotor winding 126 phases, and more than three rotor winding 126 phases. Rotor power converter 128, in the exemplary embodiment, is embodied in an alternating current (AC)-to-AC power converter coupled to 3-phase power lines 116 through at least one converter electrical line 132. Rotor winding 126 is embodied in a multi-phase AC rotor winding 126. In other embodiments, not shown, rotor power converter 128 is further coupled through converter electrical line 132 to a source of electrical power other than 3-phase power lines 116 including, without limitation, a direct current (DC) source. In still other embodiments, not shown, rotor power converter 128 is embodied in a DC-to-AC power converter.

Turbomachinery system 100 also includes a rotor controller 134 coupled to rotor winding 126 and coupled to at least one of rotor power converter 128 and converter electrical line 132. In other embodiments, not shown, one rotor winding 126 of a plurality of rotor windings 126 is coupled to one respective rotor controller 134 of a plurality of rotor controller 134. Turbomachinery system 100 further includes at least one sensor 136 coupled to rotor controller 134 and coupled to at least one of first shaft 106 and second shaft 110. Sensor 136 is also coupled to second shaft 110 proximate generator 112. In other embodiments, not shown, sensor 136 is coupled to second shaft 110 distal generator 112 including, without limitation, proximate auxiliary machine 104. At least one sensor 136 is further coupled to at least one of turbomachine 102, auxiliary machine 104, power source 118, and converter electrical line 132. In other embodiments, not shown, at least one sensor 136 is further coupled to other locations within turbomachinery system 100 other than at least one of first shaft 106, second shaft 110, turbomachine 102, auxiliary machine 104, power source 118, and converter electrical line 120. In still other embodiments, not shown, one sensor 136 of a plurality of sensors 136 is coupled to more than one rotor controller 134 of a plurality of rotor controllers 134.

In operation, in the exemplary embodiment, cavity 122 of stator 120 is sized and configured to receive rotor 124 and second shaft 110 to facilitate a rotation of rotor 124 and at least a part of second shaft 110 within cavity 122. Stator 120, in the exemplary embodiment, is embodied in an AC stator configured to supply a 3-phase AC current to grid 114. Rotation of second shaft 110 and rotor 124 within cavity 122 results in a first rotating magnetic field which induces 3-phase AC current in stator 120 through an electromagnetic interaction between rotor 124 and stator 120 including, without limitation, a magnetic flux interaction across an air gap, not shown, defined between rotor 124 and stator 120, i.e., a "generator action" of generator 112.

Also, in operation, electrical machine 108, i.e., generator 112, is susceptible to harmonic oscillations during operation of turbomachinery system 100. Sensor 136 is configured to detect a first physical characteristic of turbomachinery system 100 representative of harmonic oscillations and transmit a control signal 138 to rotor controller 134. First physical characteristics representative of harmonic oscillations of at least one of generator 112 and turbomachinery system 100 include, without limitation, at least one of a magnitude, a direction, and a frequency of an axial deflection of at least one of rotor 124, first shaft 106, second shaft 110, and additional shafts rotatably coupled to at least one of turbomachine 102, generator 112, and auxiliary machine 104. First physical characteristics representative of harmonic oscillations of at least one of generator 112 and turbomachinery system 100 also include, without limitation, at least one of a direction and an angular velocity of a rotation of at least one of rotor 124, first shaft 106, second shaft 110, and additional shafts rotatably coupled to at least one of turbomachine 102, generator 112, and auxiliary machine 104. First physical characteristics representative of harmonic oscillations of at least one of generator 112 and turbomachinery system 100 further include, without limitation, at least one of a magnitude, a direction, and a frequency of a torque associated with harmonic oscillations of at least one of rotor 124, first shaft 106, second shaft 110, and additional shafts rotatably coupled to at least one of turbomachine 102, generator 112, and auxiliary machine 104. First physical characteristics representative of harmonic oscillations of at least one of generator 112 and turbomachinery system 100 also include, without limitation, at least one of a magnitude, a direction, and a frequency of a current transmitted from generator 112 stator winding, not shown, to at least one of grid 114 and rotor power converter 128. First physical characteristics representative of harmonic oscillations of at least one of generator 112 and turbomachinery system 100 further include, without limitation, at least one of a magnitude, a direction, and a frequency of a voltage across electrical terminals, not shown, of at least one of generator 112 stator winding, not shown, and rotor power converter 128. First physical characteristics representative of harmonic oscillations of at least one of generator 112 and turbomachinery system 100 also include, without limitation, at least one of a magnitude, a direction, and a frequency of at least one of a vibration and an acceleration associated with at least one of generator 112, turbomachine 102, auxiliary machine 104, rotor winding 126, first shaft 106, second shaft 110, additional shafts rotatably coupled to at least one of turbomachine 102, generator 112, and auxiliary machine 104, and any other component of turbomachinery system 100 whereupon an occurrence of at least one of vibrations and accelerations is representative of harmonic oscillations in at least one of generator 112 and turbomachinery system 100.

In operation of the exemplary embodiment, at least one of rotor 124, first shaft 106, second shaft 110, and additional shafts rotatably coupled to at least one of turbomachine 102, generator 112, and auxiliary machine 104 is susceptible to torsional oscillations during operation of turbomachinery system 100. Sensor 136 is further configured to detect a second physical characteristic of turbomachinery system 100 representative of torsional oscillations and transmit a control signal 138 to rotor controller 134. Second physical characteristics representative of torsional oscillations of at least one of rotor 124, first shaft 106, second shaft 110, and the aforementioned additional shafts, if any, include, without limitation, at least one of a magnitude, a direction, and a frequency of an axial deflection of at least one of rotor 124, first shaft 106, second shaft 110, and the aforementioned additional shafts, if any. Second physical characteristics representative of torsional oscillations of at least one of rotor 124, first shaft 106, second shaft 110, and the aforementioned additional shafts, if any, also include, without limitation, at least one of a direction and an angular velocity of a rotation of at least one of rotor 124, first shaft 106, second shaft 110, and the aforementioned additional shafts, if any. Second physical characteristics representative of torsional oscillations of at least one of rotor 124, first shaft 106, second shaft 110, and the aforementioned additional shafts, if any, further include, without limitation, at least one of a magnitude, a direction, and a frequency of a torque associated with torsional oscillations of at least one of rotor 124, first shaft 106, second shaft 110, and the aforementioned additional shafts, if any. Second physical characteristics representative of torsional oscillations of at least one of rotor 124, first shaft 106, second shaft 110, and the aforementioned additional shafts, if any, also include, without limitation, at least one of a magnitude, a direction, and a frequency of a current transmitted from generator 112 stator winding, not shown, to at least one of grid 114 and rotor power converter 128. Second physical characteristics representative of torsional oscillations of at least one of rotor 124, first shaft 106, second shaft 110, and the aforementioned additional shafts, if any, further include, without limitation, at least one of a magnitude, a direction, and a frequency of a voltage across electrical terminals, not shown, of at least one of generator 112 stator winding, not shown, and rotor power converter 128. Second physical characteristics representative of torsional oscillations of at least one of rotor 124, first shaft 106, second shaft 110, and the aforementioned additional shafts, if any, also include, without limitation, at least one of a magnitude, a direction, and a frequency of at least one of a vibration and an acceleration associated with at least one of generator 112, turbomachine 102, auxiliary machine 104, rotor winding 126, first shaft 106, second shaft 110, the aforementioned additional shafts, if any, and any other component of turbomachinery system 100 whereupon an occurrence of at least one of vibrations and accelerations is representative of torsional oscillations in turbomachinery system 100.

In the exemplary embodiment, sensor 136 includes sensor types configured to detect and measure the aforementioned first physical characteristics and second physical characteristics including, without limitation, deflection sensors, angular velocity sensors, torque sensors, electrical current sensors, voltage potential sensors, electrical frequency sensors, vibration sensors, and acceleration sensors. The aforementioned second physical characteristics are the same types of sensor 136-detectable physical characteristics as the aforementioned first physical characteristics. In other embodiments, not shown, the aforementioned second physical characteristics are different types of sensor 136-detectable physical characteristics than the aforementioned first physical characteristics. Sensor 136 is further configured to detect both second physical characteristics and first physical characteristics. In other embodiments, not shown, types of sensor 136 configured to detect second characteristics are different from types of sensor 136 configured to detect first physical characteristics.

In operation of the exemplary embodiment, rotor winding 126 is configured to alternately energize and de-energize to alternately apply and remove, respectively, a corrective torque to at least one of rotor 124, first shaft 106, second shaft 110, and additional shafts rotatably coupled to at least one of turbomachine 102, generator 112, and auxiliary machine 104. Receipt of control signal 138 including, without limitation, receipt of control signal 138 in real-time, by rotor controller 134 is indicative of a presence of at least one of harmonic oscillations and torsional oscillations within at least one of generator 112 and turbomachinery system 100. In the exemplary embodiment, control signal 138 contains data having a first value when at least one of harmonic oscillations and torsional oscillations are present in at least one of generator 112 and turbomachinery system 100, and control signal 138 contains data having a second value different from the first value when at least one of harmonic oscillations and torsional oscillations are not present in at least one of generator 112 and turbomachinery system 100.

In operation of the exemplary embodiment, receipt of control signal 138 having the first value by rotor controller 134 enables a flow of electrical current from rotor power converter 128 to rotor winding 126 and thereby enables application of corrective torque by rotor winding 126 by energizing rotor winding 126. Energizing rotor winding 126 facilitates application of corrective torque to dampen at least one of harmonic oscillations and torsional oscillations. Further, receipt of control signal 138 having the second value by rotor controller 134 disables the flow of electrical current from rotor power converter 128 to rotor winding 126 and thereby removes corrective torque by rotor winding 126 by de-energizing rotor winding 126. In other embodiments, not shown, control signal 138 contains only the first value of data indicative of at least one of harmonic oscillations and torsional oscillations in at least one of generator 112 and turbomachinery system 100. In still other embodiments, not shown, control signal 138 is absent and contains no data when at least one of harmonic oscillations and torsional oscillations are absent in at least one of generator 112 and turbomachinery system 100. In yet other embodiments, not shown, control signal 138 contains a range of varying data values which not only indicate presence of at least one of harmonic oscillations and torsional oscillations in at least one of generator 112 and turbomachinery system 100, but also quantify properties thereof, e.g., for operational trending purposes. In still other embodiments, not shown, rotor controller 134 is configured to adjust flow of electrical current from rotor power converter 128 to rotor winding 126 between a range of values including 0 (zero) amps to enable application of an amount of corrective torque by rotor winding 126 between a range of values including 0 newton·meters depending on an intensity of at least one of harmonic oscillations and torsional oscillations requiring corrective torque.

In operation of the exemplary embodiment, first phase rotor winding 126, second phase rotor winding 126, and third phase rotor winding 126 are each configured to alternately energize and de-energize to independently apply and remove, respectively, the aforementioned corrective torque to dampen at least one of harmonic oscillations of at least one of generator 108 and turbomachinery system 100, and torsional oscillations of at least one of rotor 124, first shaft 106, second shaft 110, and the aforementioned additional shafts, if any. Alternately energizing and de-energizing first phase rotor winding 126, second phase rotor winding 126, and third phase rotor winding 126 independently facilitates fine-tuning application of corrective torque to at least one of rotor 124, first shaft 106, second shaft 110, and the aforementioned additional shafts, if any. For example, increasing flow of current in first phase rotor winding 126 relative to second phase rotor winding 126 and third phase rotor winding 126 facilitates application of an electromechanical force including, without limitation, in at least one of a radial direction and an axial direction, in addition to the aforementioned rotational corrective torque. Further, in the exemplary embodiment, alternately energizing and de-energizing rotor winding 126 facilitates inducing a second rotating magnetic field including, without limitation, a second rotating magnetic field in a same rotational direction as first rotating magnetic field of rotor 124 and an opposite direction as first rotating magnetic field of rotor 124. In other embodiments, not shown, first phase rotor winding 126, second phase rotor winding 126, and third phase rotor winding 126 do not alternately energize and de-energize independently, but rather, alternately energize and de-energize substantially simultaneously as a set.

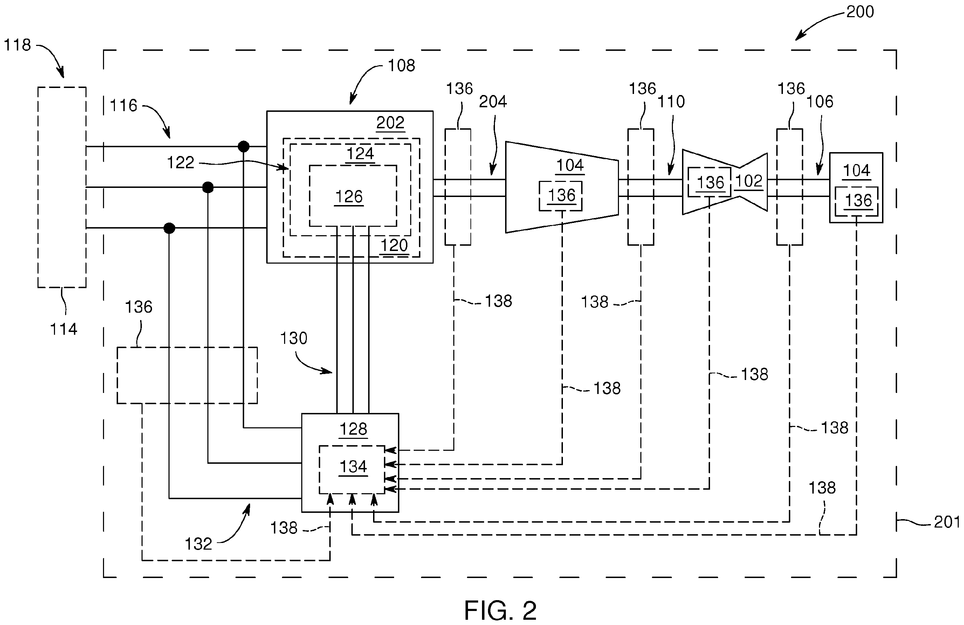

FIG. 2 is a schematic diagram of an alternative turbomachinery system 200. In this alternative embodiment, turbomachinery system 200 is situated in a turbomachinery facility 201 and includes turbomachine 102 including, without limitation, at least one of a compressor and a pump. Turbomachinery system 200 also includes at least one auxiliary machine 104 including, without limitation, at least one of a compressor and a pump. A first auxiliary machine 104 is rotatably coupled to turbomachine 102 through first shaft 106. A second auxiliary machine 104 is coupled to turbomachine 102 through second shaft 110. Turbomachinery system 200 further includes an electrical machine 108 rotatably coupled to second auxiliary machine 104 through second shaft 110. Electrical machine 108, in this alternative embodiment, is embodied in a motor 202 including, without limitation, a doubly-fed induction motor (DFIM). Turbomachine 102 functions as a motor-driven turbomachine, and turbomachine facility 201 is embodied in a motor-driven rotating machinery train.

Turbomachinery system 200, in this alternative embodiment, includes a power source 118 embodied in grid 114 coupled to motor 202. Motor 202 is embodied in a 3-phase AC motor coupled to grid 114 through 3-phase power lines 116. In other embodiments, not shown, other electrical devices including, without limitation, a motor power converter, is coupled to and between grid 114 and motor 202. Motor 202 includes stator 120 embodied in annular stator 120 defining annular cavity 122 therein. Motor 202 also includes rotor 124 coupled to a third shaft 204. Third shaft 204 is further coupled to second auxiliary machine 104. In this alternative embodiment, rotor 124 is embodied in an annular rotor 124 including at least one rotor winding 126 extending around rotor 124.

Turbomachinery system 200 also includes rotor power converter 128 coupled to rotor winding 126 through at least one rotor electrical line 130. Rotor winding 126, in this alternative embodiment, is embodied in a plurality of rotor windings 126 including a first phase rotor winding 126, a second phase rotor winding 126, and a third phase rotor winding 126. Each rotor winding 126 of the plurality of rotor windings 126 is coupled to a respective rotor electrical line 130 of a plurality of rotor electrical lines 130. In other embodiments, not shown, rotor winding 126 is embodied in at least one of a single phase rotor winding 126, two rotor winding 126 phases, and more than three rotor winding 126 phases. Rotor power converter 128, in this alternative embodiment, is embodied in an AC-to-AC power converter coupled to 3-phase power lines 116 through at least one converter electrical line 132. Rotor winding 126 is embodied in a multi-phase AC rotor winding 126. In other embodiments, not shown, rotor power converter 128 is further coupled through converter electrical line 132 to a source of electrical power other than 3-phase power lines 116 including, without limitation, a direct current (DC) source. In still other embodiments, not shown, rotor power converter 128 is embodied in a DC-to-AC power converter.

Turbomachinery system 200 further includes rotor controller 134 coupled to rotor winding 126 and coupled to at least one of rotor power converter 128 and converter electrical line 132. In other embodiments, not shown, one rotor winding 126 of a plurality of rotor windings 126 is coupled to one respective rotor controller 134 of a plurality of rotor controller 134. At least one sensor 136 is coupled to rotor controller 134 and coupled to at least one of first shaft 106, second shaft 110, and third shaft 204. Sensor 136 is also coupled to third shaft 204 proximate motor 202. In other embodiments, not shown, sensor 136 is coupled to third shaft 204 distal motor 202 including, without limitation, proximate second auxiliary machine 104. At least one sensor 136 is further coupled to at least one of turbomachine 102, at least auxiliary machine 104, power source 118, and converter electrical line 132. In other embodiments, not shown, at least one sensor 136 is further coupled to other locations within turbomachinery system 200 other than at least one of first shaft 106, second shaft 110, third shaft 204, turbomachine 102, at least one auxiliary machine 104, power source 118, and converter electrical line 120. In still other embodiments, not shown, one sensor 136 of a plurality of sensors 136 is coupled to more than one rotor controller 134 of a plurality of rotor controllers 134.

In operation, in this alternative embodiment, cavity 122 of stator 120 is sized and configured to receive rotor 124 and third shaft 204 to facilitate a rotation of rotor 124 and at least a part of third shaft 204 within cavity 122. Stator 120, in this alternative embodiment, is embodied in an AC stator configured to receive 3-phase AC current from grid 114. A first rotating magnetic field induced in stator 120 induces a torque to rotate rotor 124 and third shaft 204 within cavity 122 through an electromagnetic interaction between rotor 124 and stator 120 including, without limitation, a magnetic flux interaction across air gap, not shown, between rotor 124 and stator 120, i.e., a "motor action" of motor 202.

Also, in operation, electrical machine 108, i.e., motor 202, is susceptible to harmonic oscillations during operation of turbomachiery system 200. Sensor 136 is configured to detect a first physical characteristic of turbomachinery system 200 representative of harmonic oscillations and transmit a control signal 138 to rotor controller 134. First physical characteristics representative of harmonic oscillations of at least one of motor 202 and turbomachinery system 200 include, without limitation, at least one of a magnitude, a direction, and a frequency of an axial deflection of at least one of rotor 124, first shaft 106, second shaft 110, third shaft 204, and additional shafts rotatably coupled to at least one of turbomachine 102, motor 202, and auxiliary machine 104. First physical characteristics representative of harmonic oscillations of at least one of motor 202 and turbomachinery system 200 also include, without limitation, at least one of a direction and an angular velocity of a rotation of at least one of rotor 124, first shaft 106, second shaft 110, third shaft 204, and additional shafts rotatably coupled to at least one of turbomachine 102, motor 202, and auxiliary machine 104. First physical characteristics representative of harmonic oscillations of at least one of motor 202 and turbomachinery system 200 also include, without limitation, at least one of a magnitude, a direction, and a frequency of a torque associated with harmonic oscillations of at least one of rotor 124, first shaft 106, second shaft 110, third shaft 204, and additional shafts rotatably coupled to at least one of turbomachine 102, motor 202, and auxiliary machine 104. First physical characteristics representative of harmonic oscillations of at least one of motor 202 and turbomachinery system 200 further include, without limitation, at least one of a magnitude, a direction, and a frequency of a current transmitted from grid 114 to at least one of stator 120 and rotor power converter 128. First physical characteristics representative of harmonic oscillations of at least one of motor 202 and turbomachinery system 200 also include, without limitation, at least one of a magnitude, a direction, and a frequency of a voltage across electrical terminals, not shown, of at least one of motor 202 stator winding, not shown, and rotor power converter 128. First physical characteristics representative of harmonic oscillations of at least one of motor 202 and turbomachinery system 200 further include, without limitation, at least one of a magnitude, a direction, and a frequency of at least one of a vibration and an acceleration associated with at least one of motor 202, turbomachine 102, auxiliary machine 104, rotor winding 126, first shaft 106, second shaft 110, third shaft 204, additional shafts rotatably coupled to at least one of turbomachine 102, motor 202, and auxiliary machine 104, and any other component of turbomachinery system 200 whereupon an occurrence of at least one of vibrations and accelerations is representative of harmonic oscillations in at least one of motor 202 and turbomachinery system 200.

In operation of this alternative embodiment, at least one of rotor 124, first shaft 106, second shaft 110, third shaft 204, and additional shafts rotatably coupled to at least one of turbomachine 102, motor 202, and auxiliary machine 104 is susceptible to torsional oscillations during operation of turbomachinery system 200. Sensor 136 is further configured to detect a second physical characteristic of turbomachinery system 200 representative of torsional oscillations and transmit a control signal 138 to rotor controller 134. Second physical characteristics representative of torsional oscillations of at least one of rotor 124, first shaft 106, second shaft 110, third shaft 204, and the aforementioned additional shafts, if any, include, without limitation, at least one of a magnitude, a direction, and a frequency of an axial deflection of at least one of rotor 124, first shaft 106, second shaft 110, third shaft 204, and the aforementioned additional shafts, if any. Second physical characteristics representative of torsional oscillations of at least one of rotor 124, first shaft 106, second shaft 110, third shaft 204, and the aforementioned additional shafts, if any, also include, without limitation, at least one of a direction and an angular velocity of a rotation of at least one of rotor 124, first shaft 106, second shaft 110, third shaft 204, and the aforementioned additional shafts, if any. Second physical characteristics representative of torsional oscillations of at least one of rotor 124, first shaft 106, second shaft 110, third shaft 204, and the aforementioned additional shafts, if any, further include, without limitation, at least one of a magnitude, a direction, and a frequency of a torque associated with torsional oscillations of at least one of rotor 124, first shaft 106, second shaft 110, third shaft 204, and the aforementioned additional shafts, if any. Second physical characteristics representative of torsional oscillations of at least one of rotor 124, first shaft 106, second shaft 110, third shaft 204, and the aforementioned additional shafts, if any, also include, without limitation, at least one of a magnitude, a direction, and a frequency of a current transmitted from grid 114 to at least one of motor 202 stator winding, not shown, and rotor power converter 128. Second physical characteristics representative of torsional oscillations of at least one of rotor 124, first shaft 106, second shaft 110, third shaft 204, and the aforementioned additional shafts, if any, further include, without limitation, at least one of a magnitude, a direction, and a frequency of a voltage across electrical terminals, not shown, of at least one of motor 202 stator winding, not shown, and rotor power converter 128. Second physical characteristics representative of torsional oscillations of at least one of rotor 124, first shaft 106, second shaft 110, third shaft 204, and the aforementioned additional shafts, if any, also include, without limitation, at least one of a magnitude, a direction, and a frequency of at least one of a vibration and an acceleration associated with at least one of motor 202, turbomachine 102, auxiliary machine 104, rotor winding 126, first shaft 106, second shaft 110, third shaft 204, the aforementioned additional shafts, if any, and any other component of turbomachinery system 200 whereupon an occurrence of at least one of vibrations and accelerations is representative of torsional oscillations in turbomachinery system 200.

In this alternative embodiment, sensor 136 includes sensor types configured to detect and measure the aforementioned first physical characteristics and second physical characteristics including, without limitation, deflection sensors, angular velocity sensors, torque sensors, electrical current sensors, voltage potential sensors, electrical frequency sensors, vibration sensors, and acceleration sensors. The aforementioned second physical characteristics are the same types of sensor 136-detectable physical characteristics as the aforementioned first physical characteristics. In other embodiments, not shown, the aforementioned second physical characteristics are different types of sensor 136-detectable physical characteristics than the aforementioned first physical characteristics. Sensor 136 is further configured to detect both second physical characteristics and first physical characteristics. In other embodiments, not shown, types of sensor 136 configured to detect second characteristics are different from types of sensor 136 configured to detect first physical characteristics.

In operation of this alternative embodiment, rotor winding 126 is configured to alternately energize and de-energize to alternately apply and remove, respectively, a corrective torque to at least one of rotor 124, first shaft 106, second shaft 110, third shaft 204, and additional shafts, if any, rotatably coupled to at least one of turbomachine 102, motor 202, and auxiliary machine 104. Receipt of control signal 138 including, without limitation, receipt of control signal 138 in real-time, by rotor controller 134 is indicative of a presence of at least one of harmonic oscillations and torsional oscillations within at least one of motor 202 and turbomachinery system 200. In this alternative embodiment, control signal 138 contains data having a first value when at least one of harmonic oscillations and torsional oscillations are present in at least one of motor 202 and turbomachinery system 200, and control signal 138 contains data having a second value different from the first value when at least one of harmonic oscillations and torsional oscillations are not present in at least one of motor 202 and turbomachinery system 200.

Moreover, in operation of this alternative embodiment, receipt of control signal 138 having the first value by rotor controller 134 enables a flow of electrical current from rotor power converter 128 to rotor winding 126 and thereby enables application of corrective torque by rotor winding 126 by energizing rotor winding 126. Energizing rotor winding 126 facilitates application of corrective torque to dampen at least one of harmonic oscillations and torsional oscillations. Further, receipt of control signal 138 having the second value by rotor controller 134 disables the flow of electrical current from rotor power converter 128 to rotor winding 126 and thereby removes corrective torque by rotor winding 126 by de-energizing rotor winding 126. In other embodiments, not shown, control signal 138 contains only the first value of data indicative of at least one of harmonic oscillations and torsional oscillations in at least one of motor 202 and turbomachinery system 200. In still other embodiments, not shown, control signal 138 is absent and contains no data when at least one of harmonic oscillations and torsional oscillations are absent in at least one of motor 202 and turbomachinery system 200. In yet other embodiments, not shown, control signal 138 contains a range of varying data values which not only indicate presence of at least one of harmonic oscillations and torsional oscillations in at least one of generator 112 and turbomachinery system 100, but also quantify properties thereof, e.g., for operational trending purposes. In still other embodiments, not shown, rotor controller 134 is configured to adjust flow of electrical current from rotor power converter 128 to rotor winding 126 between a range of values including 0 amps to enable application of an amount of corrective torque by rotor winding 126 between a range of values including 0 newton-meters depending on an intensity of at least one of harmonic oscillations and torsional oscillations requiring corrective torque.

In operation of this alternative embodiment, first phase rotor winding 126, second phase rotor winding 126, and third phase rotor winding 126 are each configured to alternately energize and de-energize to independently apply and remove, respectively, the aforementioned corrective torque to dampen at least one of harmonic oscillations of at least one of motor 202 and turbomachinery system 200, and torsional oscillations of at least one of rotor 124, first shaft 106, second shaft 110, third shaft 204, and the aforementioned additional shafts, if any. Alternately energizing and de-energizing first phase rotor winding 126, second phase rotor winding 126, and third phase rotor winding 126 independently facilitates fine-tuning application of corrective torque to at least one of rotor 124, first shaft 106, second shaft 110, third shaft 204, and the aforementioned additional shafts, if any. For example, increasing the flow of current in first phase rotor winding 126 relative to second phase rotor winding 126 and third phase rotor winding 126 facilitates application of an electromechanical force including, without limitation, in at least one of a radial direction and an axial direction, in addition to the aforementioned rotational corrective torque. Further, alternately energizing and de-energizing rotor winding 126 facilitates inducing second rotating magnetic field including, without limitation, second rotating magnetic field in the same rotational direction as first rotating magnetic field of rotor 124 and the opposite direction as first rotating magnetic field. In other embodiments, not shown, first phase rotor winding 126, second phase rotor winding 126, and third phase rotor winding 126 do not alternately energize and de-energize independently, but rather, alternately energize and de-energize substantially simultaneously as a set.

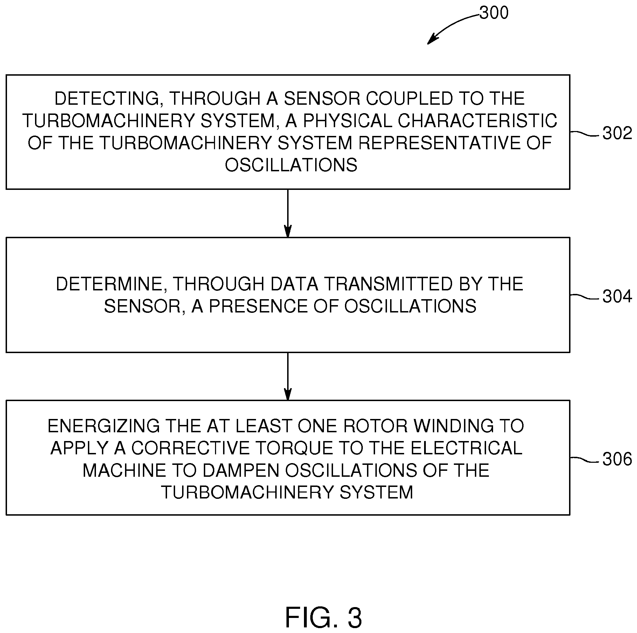

FIG. 3 is a flowchart diagram of an exemplary method 300 of damping oscillations of an electrical machine in a turbomachinery system that may be used with turbomachinery system 100 and turbomachinery system 200 shown in FIGs. 1 and 2, respectively. Referring to FIGs. 1 and 2, method 300 includes detecting 302, through sensor 136 coupled to at least one of turbomachinery system 100 and turbomachinery 200, at least one of a first physical characteristic and a second physical characteristic, of at least one of turbomachinery system 100 and turbomachinery 200, representative of oscillations, e.g., at least one of harmonic oscillations and torsional oscillations. Method 300 also includes determining 304, through data transmitted by sensor 136, a presence of oscillations. Method 300 further includes energizing 306 at least one rotor winding 126 to apply a corrective torque to electrical machine 108 to dampen oscillations in at least one of turbomachinery system 100 and turbomachinery system 200.

The above-described electrical machine rotor windings for reduction of oscillations in turbomachinery systems and associated systems and methods reduce sub-synchronous torsional interactions (SSTIs) of shafts and rotating machinery including electrical machines in rotating equipment trains. The above-described embodiments also mitigate undesirable effects of SSTIs and aberrant torques arising therefrom in turbomachinery systems. The above-described embodiments further reduce torque imbalances in electrical machines employed in turbomachinery systems. The above-described electrical machine rotor windings for reduction of oscillations in turbomachinery systems and associated systems and methods also reduce operating and maintenance costs and increase operational efficiency of turbomachinery systems. The above-described embodiments further provide less complex and less expensive SSTI mitigation devices, systems, and methods that are easier to operate and integrate into existing plant designs. The above-described embodiments also enable installation and maintenance of SSTI mitigation devices and systems without shutting down turbomachinery system operations.

An exemplary technical effect of the above-described electrical machine rotor windings for reduction of oscillations and associated systems and methods includes at least one of the following: (a) reducing SSTIs of shafts and rotating machinery including electrical machines in rotating equipment trains; (b) mitigating undesirable effects of SSTIs and aberrant torques arising therefrom in turbomachinery systems; (c) reducing torque imbalances in electrical machines employed in turbomachinery systems; (d) reducing operating and maintenance costs and increasing operational efficiency of turbomachinery systems; (e) providing less complex and less expensive SSTI mitigation devices, systems, and methods that are easier to operate and integrate into existing plant designs; and (f) enabling installation and maintenance of SSTI mitigation devices and systems without shutting down turbomachinery system operations.

Exemplary embodiments of electrical machine rotor windings for reduction of oscillations and associated systems and methods are not limited to the specific embodiments described herein, but rather, components of systems and/or steps of the methods may be utilized independently and separately from other components and/or steps described herein. For example, the methods, systems, and apparatus may also be used in combination with other systems requiring reduction of oscillations of shafts and rotating machinery coupled thereto including, without limitation, rotating machinery trains employing a plurality of electrical machines of varying types, and the associated methods are not limited to practice with only the systems and methods as described herein. Rather, the exemplary embodiments can be implemented and utilized in connection with many other applications, equipment, and systems that may benefit from using the above-described embodiments of electrical machine rotor windings for reduction of oscillations and associated systems and methods to improve the effectiveness and efficiency of operation for rotating machinery trains and other related systems in various applications.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer-readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art.

## Claims

1. An electrical machine (108) comprising:
a stator (120) defining a cavity (122) therein;
a shaft (110); and
a rotor (124) coupled to said shaft (110), said rotor (124) and said shaft (110) configured to be positioned at least partially within the cavity (122), **characterised by** said rotor (124)
comprising at least one rotor winding (126) configured to alternately energize and de-energize to alternately apply and remove, respectively, a corrective torque to said electrical machine (108) to dampen harmonic oscillations thereof.

2. A turbomachinery system (100) comprising:
a turbomachine (102);
a rotor power converter (128); and
an electrical machine (108) in accordance with claim 1 coupled to said turbomachine (102) by said shaft (110) extending therebetween to dampen harmonic oscillations of said turbomachinery system (100).

3. The turbomachinery system in accordance with Claim 2, wherein said at least one rotor winding (126) comprises a plurality of rotor windings comprising a first phase rotor winding, a second phase rotor winding, and a third phase rotor winding, each said rotor winding of said plurality of rotor windings configured to alternately energize and de-energize to independently apply and remove, respectively, the corrective torque to said electrical machine (108).

4. The turbomachinery system in accordance with Claim 2 or Claim 3, wherein said electrical machine (108) comprises a generator.

5. The turbomachinery system in accordance with Claim 4, wherein said generator comprises a doubly-fed induction generator.

6. The turbomachinery system in accordance with any of Claims 2 to 5, wherein said electrical machine (108) comprises a motor.

7. The turbomachinery system in accordance with Claim 6, wherein said motor comprises a doubly-fed induction motor.

8. The turbomachinery system in accordance with any of Claims 2 to 7, further comprising a power source (118) comprising a fuel supply coupled to said turbomachine (102).

9. The turbomachinery system in accordance with any of Claims 2 to 7, further comprising a power source (118) comprising an electrical power supply coupled to said electrical machine (108).

10. The turbomachinery system in accordance with any of Claims 2 to 9, further comprising:
a rotor controller (134) coupled to said rotor power converter (128) and said at least one rotor winding (126); and
a sensor (136) coupled to said rotor controller (134), said sensor (136) configured to detect a first physical characteristic of said turbomachinery system (100) representative of harmonic oscillations and transmit a control signal to said rotor controller (134) to alternately apply and remove the corrective torque to said electrical machine (108) through said at least one rotor winding (126).

11. The turbomachinery system in accordance with Claim 10, wherein said sensor is further configured to detect a second physical characteristic of said turbomachinery system (100) representative of torsional oscillations of said shaft (110), wherein the second physical characteristic is at least one of a same physical characteristic as the first physical characteristic and a different physical characteristic from the first physical characteristic, and wherein said at least one rotor winding (126) is further configured to alternately energize and de-energize to alternately apply and remove, respectively, the corrective torque to said electrical machine (108) to dampen torsional oscillations of said shaft (110).

12. The turbomachinery system in accordance with Claim 10 or Claim 11, wherein said sensor (136) is further coupled to at least one of said turbomachine (102), said electrical machine (108), said rotor power converter (128), and said shaft (110).

13. The turbomachinery system in accordance with any of Claims 10 to 12, wherein said sensor (136) is further coupled to said shaft (110) proximate said electrical machine (108).

14. The turbomachinery system in accordance with any of Claims 10 to 13, further comprising:
an auxiliary machine (104);
a plurality of shafts coupled to said electrical machine (108), said turbomachine (102), and said auxiliary machine (104); and
a plurality of sensors (136) coupled to at least one of at least one shaft of said plurality of shafts, said turbomachine (102), said electrical machine (108), and said rotor power converter (128).

15. A method of damping oscillations of a turbomachinery system (100) that includes an electrical machine (108) coupled to a turbomachine (102) by a shaft (110) extending therebetween, the electrical machine (108) including a stator (120) defining a cavity (122) therein and a rotor (124) coupled to the shaft (110) and configured to be positioned at least partially within the cavity (122), the rotor (124) including at least one rotor winding (126), said method comprising:
detecting, through a sensor (136) coupled to the turbomachinery system (100), a physical characteristic of the turbomachinery system (100) representative of oscillations;
determining, through data transmitted by the sensor (136), a presence of oscillations; and **characterised by**
alternately energizing and de-energizing the at least one rotor winding (126) to alternately apply and remove, respectively, a corrective torque to the electrical machine (108) to dampen oscillations of the turbomachinery system (100).

## Patentansprüche

1. Elektrische Maschine (108), umfassend:
einen Stator (120), der einen Hohlraum (122) darin definiert;
eine Welle (110); und
einen Rotor (124), der mit der Welle (110) gekoppelt ist, wobei der Rotor (124) und die Welle (110) konfiguriert sind, um mindestens teilweise innerhalb des Hohlraums (122) positioniert zu werden, **dadurch gekennzeichnet, dass** der Rotor (124) mindestens eine Rotorwicklung (126) umfasst, die konfiguriert ist, abwechselnd bestromt und stromlos geschaltet zu werden, um abwechselnd ein Korrekturdrehmoment auf die elektrische Maschine (108) aufzubringen bzw. zu entfernen, um harmonische Schwingungen davon zu dämpfen.

2. Turbomaschinensystem (100), umfassend:
eine Turbomaschine (102);
einen Rotor-Leistungswandler (128); und
eine elektrische Maschine (108) nach Anspruch 1, die mit der Turbomaschine (102) durch die sich dazwischen erstreckende Welle (110) gekoppelt ist, um harmonische Schwingungen des Turbomaschinensystems (100) zu dämpfen.

3. Turbomaschinensystem nach Anspruch 2, wobei die mindestens eine Rotorwicklung (126) eine Vielzahl von Rotorwicklungen umfasst, die eine Rotorwicklung einer ersten Phase, eine Rotorwicklung einer zweiten Phase und eine Rotorwicklung einer dritten Phase umfassen, wobei jede Rotorwicklung der Vielzahl von Rotorwicklungen konfiguriert ist, um abwechselnd bestromt und stromlos geschaltet zu werden, um unabhängig das Korrekturdrehmoment auf die elektrische Maschine (108) aufzubringen bzw. zu entfernen.

4. Turbomaschinensystem nach Anspruch 2 oder Anspruch 3, wobei die elektrische Maschine (108) einen Generator umfasst.

5. Turbomaschinensystem nach Anspruch 4, wobei der Generator einen doppelt gespeisten Induktionsgenerator umfasst.

6. Turbomaschinensystem nach einem der Ansprüche 2 bis 5, wobei die elektrische Maschine (108) einen Motor umfasst.

7. Turbomaschinensystem nach Anspruch 6, wobei der Motor einen doppelt gespeisten Induktionsmotor umfasst.

8. Turbomaschinensystem nach einem der Ansprüche 2 bis 7, ferner umfassend eine Leistungsquelle (118), die eine Brennstoffversorgung umfasst, die mit der Turbomaschine (102) gekoppelt ist.

9. Turbomaschinensystem nach einem der Ansprüche 2 bis 7, ferner umfassend eine Leistungsquelle (118), die eine elektrische Stromversorgung umfasst, die mit der elektrischen Maschine (108) gekoppelt ist.

10. Turbomaschinensystem nach einem der Ansprüche 2 bis 9, ferner umfassend:
eine Rotorsteuerung (134), die mit dem Rotor-Leistungswandler (128) und der mindestens einen Rotorwicklung (126) gekoppelt ist; und
einen Sensor (136), der mit der Rotorsteuerung (134) gekoppelt ist, wobei der Sensor (136) konfiguriert ist, um eine erste physikalische Eigenschaft des Turbomaschinensystems (100) zu erfassen, die für harmonische Schwingungen repräsentativ ist, und ein Steuersignal an die Rotorsteuerung (134) zu übertragen, um abwechselnd das Korrekturdrehmoment durch die mindestens eine Rotorwicklung (126) an die elektrische Maschine (108) aufzubringen und zu entfernen.

11. Turbomaschinensystem nach Anspruch 10, wobei der Sensor ferner konfiguriert ist, um eine zweite physikalische Eigenschaft des Turbomaschinensystems (100) zu erfassen, die für Torsionsschwingungen der Welle (110) repräsentativ ist, wobei die zweite physikalische Eigenschaft mindestens eine von einer gleichen physikalischen Eigenschaft wie die erste physikalische Eigenschaft und einer anderen physikalischen Eigenschaft als die erste physikalische Eigenschaft ist, und wobei die mindestens eine Rotorwicklung (126) ferner konfiguriert ist, um abwechselnd bestromt und stromlos geschaltet zu werden, um abwechselnd das Korrekturdrehmoment auf die elektrische Maschine (108) aufzubringen bzw. zu entfernen, um Torsionsschwingungen der Welle (110) zu dämpfen.

12. Turbomaschinensystem nach Anspruch 10 oder Anspruch 11, wobei der Sensor (136) ferner mit mindestens einem von der Turbomaschine (102), der elektrischen Maschine (108), dem Rotor-Leistungswandler (128) und der Welle (110) gekoppelt ist.

13. Turbomaschinensystem nach einem der Ansprüche 10 bis 12, wobei der Sensor (136) ferner mit der Welle (110) nahe der elektrischen Maschine (108) gekoppelt ist.

14. Turbomaschinensystem nach einem der Ansprüche 10 bis 13, ferner umfassend:
eine Hilfsmaschine (104);
eine Vielzahl von Wellen, die mit der elektrischen Maschine (108), der Turbomaschine (102) und der Hilfsmaschine (104) gekoppelt sind; und
eine Vielzahl von Sensoren (136), die mit mindestens eines von mindestens einer Welle der Vielzahl von Wellen, der Turbomaschine (102), der elektrischen Maschine (108) und dem Rotor-Leistungswandler (128) gekoppelt sind.

15. Verfahren zum Dämpfen von Schwingungen eines Turbomaschinensystems (100), das eine elektrische Maschine (108) einschließt, die mit einer Turbomaschine (102) durch eine sich dazwischen erstreckende Welle (110) gekoppelt ist, wobei die elektrische Maschine (108) einen Stator (120), der einen Hohlraum (122) darin definiert, und einen Rotor (124), der mit der Welle (110) gekoppelt ist, einschließt und konfiguriert ist, um mindestens teilweise innerhalb des Hohlraums (122) positioniert zu werden, wobei der Rotor (124) mindestens eine Rotorwicklung (126) einschließt, wobei das Verfahren Folgendes umfasst:
Erfassen, durch einen mit dem Turbomaschinensystem (100) gekoppelten Sensor (136), einer physikalischen Eigenschaft des Turbomaschinensystems (100), die repräsentativ für Schwingungen ist;
Bestimmen, durch von dem Sensor (136) übertragene Daten, eines Vorhandenseins von Schwingungen; und **gekennzeichnet durch**
abwechselndes Bestromen und Stromlosschalten der mindestens einen Rotorwicklung (126), um abwechselnd ein Korrekturdrehmoment auf die elektrische Maschine (108) aufzubringen bzw. zu entfernen, um Schwingungen des Turbomaschinensystems (100) zu dämpfen.

## Revendications

1. Machine électrique (108) comprenant :
un stator (120) définissant une cavité (122) à l'intérieur de celle-ci ;
un arbre (110) ; et
un rotor (124) couplé audit arbre (110), ledit rotor (124) et ledit arbre (110) configurés pour être positionnés au moins partiellement au sein de la cavité (122), **caractérisée par** ledit rotor (124) comprenant au moins un enroulement de rotor (126) configuré pour activer et désactiver alternativement pour appliquer et supprimer alternativement, respectivement, un couple correcteur à ladite machine électrique (108) pour amortir des oscillations harmoniques de celle-ci.

2. Système de turbomachine (100) comprenant :
une turbomachine (102) ;
un convertisseur de puissance de rotor (128) ; et
une machine électrique (108) selon la revendication 1 couplée à ladite turbomachine (102) par ledit arbre (110) s'étendant entre elles pour amortir des oscillations harmoniques dudit système de turbomachine (100).

3. Système de turbomachine selon la revendication 2, dans lequel ledit au moins un enroulement de rotor (126) comprend une pluralité d'enroulements de rotor comprenant un enroulement de rotor de première phase, un enroulement de rotor de deuxième phase, et un enroulement de rotor de troisième phase, chacun desdits enroulements de rotor de ladite pluralité d'enroulements de rotor configuré pour activer et désactiver alternativement pour appliquer et supprimer indépendamment, respectivement, le couple correcteur à ladite machine électrique (108).

4. Système de turbomachine selon la revendication 2 ou la revendication 3, dans lequel ladite machine électrique (108) comprend un générateur.

5. Système de turbomachine selon la revendication 4, dans lequel ledit générateur comprend un générateur d'induction à double résonance.

6. Système de turbomachine selon l'une quelconque des revendications 2 à 5, dans lequel ladite machine électrique (108) comprend un moteur.

7. Système de turbomachine selon la revendication 6, dans lequel ledit moteur comprend un moteur d'induction à double résonance.

8. Système de turbomachine selon l'une quelconque des revendications 2 à 7, comprenant en outre une source de puissance (118) comprenant une alimentation en carburant couplée à ladite turbomachine (102).

9. Système de turbomachine selon l'une quelconque des revendications 2 à 7, comprenant en outre une source de puissance (118) comprenant une alimentation en puissance électrique couplée à ladite machine électrique (108).

10. Système de turbomachine selon l'une quelconque des revendications 2 à 9, comprenant en outre :
un régulateur de rotor (134) couplé audit convertisseur de puissance de rotor (128) et audit au moins un enroulement de rotor (126) ; et
un capteur (136) couplé audit régulateur de rotor (134), ledit capteur (136) configuré pour détecter une première caractéristique physique dudit système de turbomachine (100) représentative d'oscillations harmoniques et transmettre un signal de régulation audit régulateur de rotor (134) pour appliquer et supprimer alternativement le couple correcteur à ladite machine électrique (108) par l'intermédiaire dudit au moins un enroulement de rotor (126).

11. Système de turbomachine selon la revendication 10, dans lequel ledit capteur est en outre configuré pour détecter une seconde caractéristique physique dudit système de turbomachine (100) représentative d'oscillations de torsion dudit arbre (110), dans lequel la seconde caractéristique physique est au moins l'une d'une caractéristique physique semblable à la première caractéristique physique et d'une caractéristique physique différente de la première caractéristique physique, et dans lequel ledit au moins un enroulement de rotor (126) est en outre configuré pour activer et désactiver alternativement pour appliquer et supprimer alternativement, respectivement, le couple correcteur à ladite machine électrique (108) pour amortir des oscillations de torsion dudit arbre (110).

12. Système de turbomachine selon la revendication 10 ou la revendication 11, dans lequel ledit capteur (136) est en outre couplé à au moins l'un de ladite turbomachine (102), de ladite machine électrique (108), dudit convertisseur de puissance de rotor (128), et dudit arbre (110).

13. Système de turbomachine selon l'une quelconque des revendications 10 à 12, dans lequel ledit capteur (136) est en outre couplé audit arbre (110) à proximité de ladite machine électrique (108).

14. Système de turbomachine selon l'une quelconque des revendications 10 à 13, comprenant en outre :
une machine auxiliaire (104) ;
une pluralité d'arbres couplés à ladite machine électrique (108), à ladite turbomachine (102), et à ladite machine auxiliaire (104) ; et
une pluralité de capteurs (136) couplés à au moins l'un d'au moins un arbre de ladite pluralité d'arbres, de ladite turbomachine (102), de ladite machine électrique (108), et dudit convertisseur de puissance de rotor (128).

15. Procédé d'amortissement d'oscillations d'un système de turbomachine (100) qui inclut une machine électrique (108) couplée à une turbomachine (102) par un arbre (110) s'étendant entre elles, la machine électrique (108) incluant un stator (120) définissant une cavité (122) à l'intérieur de celle-ci et un rotor (124) couplé à l'arbre (110) et configuré pour être positionné au moins partiellement au sein de la cavité (122), le rotor (124) incluant au moins un enroulement de rotor (126), ledit procédé comprenant :
la détection, par l'intermédiaire d'un capteur (136) couplé au système de turbomachine (100), d'une caractéristique physique du système de turbomachine (100) représentative d'oscillations ;
la détermination, par l'intermédiaire de données transmises par le capteur (136), d'une présence d'oscillations ; et **caractérisé par**
l'activation et la désactivation alternativement de l'au moins un enroulement de rotor (126) pour appliquer et supprimer alternativement, respectivement, un couple correcteur à la machine électrique (108) pour amortir des oscillations du système de turbomachine (100).
